# EUROPÄISCHE PATENTSCHRIFT

(11) **EP 2 366 606 B1**
(45) Veröffentlichungstag und Bekanntmachung des Hinweises auf die Patenterteilung: **19.09.2012**
(21) Anmeldenummer: 10156561.2
(22) Anmeldetag: 15.03.2010
(51) Int. Cl.: B62D 29/04

(54) **Dachblende**
Roof blind
Rehaussement de toiture

(43) Veröffentlichungstag der Anmeldung: 21.09.2011
(73) Patentinhaber: DURA Automotive Body & Glass Systems GmbH, 58840 Plettenberg (DE)
(72) Erfinder: Schulte, Martin, 58802, Balve (DE); Winkhaus, Kai, 58849, Herscheid (DE); Schacht, Michael, 51688, Wipperfürth (DE); Kraus, Jürgen, 58802, Balve (DE); Vornbäumen, Jens, 58762, Altena (DE); Krehmer, Antje, 58511 Lüdenscheid (DE)
(74) Vertreter: Tersteegen, Felix

(56) Entgegenhaltungen:
- EP-A2- 1 197 393
- DE-U1- 9 109 276
- DE-U1-202005 012 421
- DE-U1-202007 016 803

## Beschreibung

Die Erfindung betrifft eine Dachblende zum Aufsetzen auf eine Kraftfahrzeugkarosserie oder als Teil eines auf eine Kraftfahrzeugkarosserie aufzusetzendes Dachmodul mit einem Toleranzausgleichskonzept.

Dachblenden sind dem Fachmann aus dem Stand der Technik in verschiedenen Varianten bekannt. Sie dienen insbesondere dazu, außenliegende Dachmodule, beispielsweise so genannte Schiebe-Hub-Dächer, randseitig zu dichten und den zwischen dem Randbereich des Dachmoduls und der Karosserieaußenhaut bestehenden Spalt abzudecken sowie optisch zu überbrücken. Solche Dachblenden werden entweder unmittelbar auf die Karosserie aufgesetzt oder als Teil einer vormontierten Dachmodulbaugruppe mittelbar mit der Karosserie verbunden. Sofern nachfolgend ausschließlich von der Fahrzeugkarosserie die Rede ist, ist dies stets auch dahingehend zu verstehen, dass die Dachblende ebenso gut auch Teil einer vormontierten Dachmodulbaugruppe sein kann.

Die deutsche Gebrauchsmusterschrift DE 20 2007 016 803 U1 offenbart Haltekörper für eine Leiste, die eine in einer Fahrzeugkarosserie ausgebildete Nut abdecken soll. Die Haltekörper erlauben eine schwimmende und damit im Wesentlichen selbstzentrierende Lagerung der Leiste in der Nut quer zur Fahrtrichtung, ermöglichen aber keinen Ausgleich längenänderungsbedingter Verschiebungen.

Die europäische OffenLegungsschrift EP 1 197 393 A1 offenbart Verbindungsglieder zur Verbindung einer Leiste mit der Kraftfahrzeugkarosserie. Die Verbindungsglieder ermöglichen jedoch keinen Ausgleich von Verschiebungen der Leiste gegenüber der Karosserie.

Dachblenden können - je nach Fahrzeugtyp - Längen von deutlich mehr als einem Meter haben. Die Temperaturen, die eine Dachblende am Fahrzeug annehmen kann, können in Abhängigkeit von den äußeren Bedingungen zwischen etwa -40°C und +80°C variieren, was eine relative Längenänderung der Dachblende gegenüber der Fahrzeugkarosserie aufgrund der unterschiedlichen Wärmeausdehnungskoeffizienten der Materialien von deutlich mehr als 10 mm bedingen kann.

In diesem Zusammenhang ist nicht nur von Bedeutung, dass die Dachblenden eine ausreichende Formstabilität trotz eventueller über den Querschnitt inhomogener Materialeigenschaften oder ungleichmäßiger Querschnittsverläufe aufweisen. Ebenfalls von Bedeutung ist, dass die temperaturbedingten Ausdehnungs- und Schrumpfungserscheinungen durch geeignete Maßnahmen im Hinblick auf das Zusammenspiel zwischen Karosserie bzw. Dachmodulbaugruppe und Dachblende technisch aufgefangen und optisch ausgeglichen werden.

Zu diesem Zweck wird eine Dachblende mit einer Blendenleiste vorgeschlagen, die an einer ersten Position eine Positionierhilfe aufweist, mittels der die Blendenleiste im bestimmungsgemäßen Einbauzustand an der ersten Position relativ zur Fahrzeugkarosserie örtlich festgelegt ist, während an zumindest einer, von der ersten Position entfernten, zweiten Position ein Ausgleichselement, insbesondere ein eine Ausgleichsbewegung zulassendes Befestigungsetement, vorgesehen ist, das längenänderungsbedingte Verschiebungen zwischen Blendenleiste und Fahrzeugkarosserie in Blendenleistenlängsrichtung auszugleichen vermag. Die Erfindung ist für eine Dachblende, die sich in Fahrzeuglängsrichtung (x-Richtung) erstreckt, ebenso anwendbar wie für eine Dachblende, die sich in Fahrzeugquerrichtung (y-Richtung) erstreckt.

Ein Ausgleichselement kann von einem Befestigungselement, beispielsweise einer Befestigungsklemme oder einem Befestigungsclip gebildet sein, das die Blendenleiste mit der Fahrzeugkarosserie verbindet und derart ausgebildet ist, dass es beim Zusammenspiel mit der Fahrzeugkarosserie Relativbewegungen zwischen Blendenleiste und Fahrzeugkarosserie in Blendenleistenlängsrichtung zulässt, während es Bewegungen in Blendenteistenquerrichtung unterbindet.

Ein Ausgleichselement kann auch von einem an der der Stirnseite der Blende angeordnetem Ausgleichsprofil gebildet sein, das den Spalt zwischen Blendenleistenstirnseite und Karosserie überbrückt, bei relativen Längenänderungen zwischen Blendenleiste und Karosserie aber derart nachgiebig ausgestaltet ist, dass es seine Breite selbsttätig an die sich ändernde Spaltbreite anzupassen vermag.

Besonders vorteilhaft ist diese Ausgestaltung dann, wenn die Positionierhilfe am einen Ende und zumindest ein Ausgleichselement, insbesondere das Ausgleichsprofil, am anderen Ende der Blendenleiste angeordnet sind. Aus optischen und aerodynamischen Gründen ist es am sinnvollsten, wenn die Positionierhilfe am in Fahrtrichtung gesehenen vorderen Endbereich der Blendenleiste angeordnet ist und das Ausgleichselement, insbesondere das Ausgleichsprofil, am hinteren Endbereich, insbesondere an der hinteren Stirnseite der Blendenleiste, angeordnet ist.

Eine bevorzugte Ausführungsform der Dachblende betrifft eine Dachblende, die eine Blendenleiste mit einer Außenschale umfasst, die eine äußerlich sichtbare Dekorfläche der Blendenleiste bildet, und mit einer Innenleiste, die von der Außenschale zumindest teilweise umgeben ist, wobei die Außenleiste und die Innenleiste fest miteinander verbunden sind, und wobei die Außenschale an die Innenleiste oder die Innenleiste an die Außenschale in einem Spritzgießprozess angespritzt ist.

Zum einen sind Dachblenden bekannt, die aus Aluminiumprofilen gefertigt werden. Die Herstellungs- und Bauteilkosten sowie die Montagekosten bei der Verwendung von Aluminiumdachblenden sind allerdings verhältnismäßig hoch.

Die Produktion von Aluminiumblenden erfordert zunächst die Herstellung bzw. den Zukauf sowie das Handling einer verhältnismäßig hohen Anzahl von Einzelkomponenten. Hierzu gehören das Aluminiumprofil selbst, diverse Keder und Dichtungen, Befestigungsmittel wie Clipse, erforderliches Material zur Nachbehandlung wie Lacke für die Oberflächenbeschichtung sowie an die Profile anzubringende Formteile wie Abschlusskappen oder ähnliches.

Auch die Blendenfertigung erfordert eine hohe Anzahl an Fertigungsschritten. So muss das zugekaufte, in der Regel gerade verlaufende Aluminiumstrangpressprofil über die Länge befräst, durch Umformung dem Verlauf der Karosserie angepasst und je nach Design verprägt werden. Auch das Schleifen der Oberfläche und eine Oberflächenbehandlung (z.B. Lackieren, Beschichten) sind erforderlich. Die anschließende Endmontage der Dachblende erfordert neben dem Anbringen von Dichtungen, Kedern und Formteilen auch die Montage von Befestigungsmitteln zur späteren Verbindung mit der Karosserie.

Einen gewissen Fortschritt gegenüber Aluminiumdachblenden stellen im Hinblick auf die vorstehend genannten Punkte Dachblenden aus Kunststoff dar, deren Komponenten von vorne herein in der gewünschten Form hergestellt werden, so dass die bei Aluminium erforderlichen Umformungen und sonstigen Bearbeitungsschritte zumindest teilweise entfallen.

Die DE 20 2005 012 421 U1 beschreibt eine zweistöckig ausgebildete Kunststoffdachblende mit einem biegesteifen Innenkörper und einer darauf aufgeklebten, dekorativen Außenschale. Innenkörper und Außenschale sind nach wie vor in getrennten Produtkionsschritten herzustellen und anschließend mittels noch aufzubringender Klebemittel zu verkleben. Auch die Dichtungen sind gesondert einzulegen. Die beschriebene Dachblende beseitigt die bei Aluminiumdachblenden bestehenden Nachteile nur in einem geringen Umfang.

Die vorstehend beschriebene, bevorzugte Ausführungsform ermöglicht es, durch eine neuartige Dachblendenkonstruktion die angesprochenen Nachteile des Standes der Technik zu minimieren. Insbesondere wird die Anzahl der für die Herstellung zuzukaufenden Einzelkomponenten reduziert, der Aufwand für die Einkaufs- und Teilelogistik sowie das Komponentenhandling und die Einzelfertigung und Endmontage werden vereinfacht.

Hierdurch werden nicht nur die bei den bereits bekannten Kunststoffdachblenden erreichten Vorteile verwirklicht, sondern außerdem weitere Montageschritte, die bei der Herstellung der bekannten Kunststoffleisten erforderlich sind, beispielsweise das gesondert vorzunehmende Verkleben einer Innenleiste mit einer Außenschale, vermieden. Bei geeigneter Steuerung der Prozessparameter ergibt sich eine haftende, stoffschlüssige Verbindung von Außenschale und Innenleiste.

Sowohl die die Außenschale als auch die Innenleiste sind bevorzugt aus Kunststoff, und die Blendenleiste ist durch sequentielles Einspritzen einer ersten Schmelze und einer zweiten Schmelze in ein Spritzgusswerkzeug hergestellt. Nach dem Spritzen des Vorspritzlings mit der ersten Schmelze und vor dem Einspritzen der zweiten Schmelze wird im Werkzeug die erforderliche Kavität für die zweite Schmelze geschaffen, so dass auf das Entformen des Vorspritzlings verzichtet werden kann. Bevorzugt wird die Innenleiste zuerst gefertigt und dann mit der Schmelze für die Außenschale umspritzt.

Bei der Auswahl der Kunststoffe ist einerseits darauf zu achten, dass diese derart Eigenschaftskompatibel sind, damit sie sich bei der Herstellung der Blendenleiste miteinander verbinden können und sich außerdem hinsichtlich ihrer temperaturbedingten Schwindungseigenschaften derart vertragen, dass weder beim Abkühlen unmittelbar nach dem Spritzgießvorgang noch im Gebrauch übermäßige Schwindungsspannungen auftreten, die Adhäsion oder Formteilstabilität beeinträchtigen könnten.

Andererseits sind die Materialeigenschaften, die für die Außenschale bzw. für die Innenleiste gefordert sind, unterschiedlich. Während die die Dekorfläche bildende Außenschale witterungsbeständig, kratz- und schlagzäh sein muss, was mit einer gewissen Materialsprödigkeit einhergeht, verlangt die Innenleiste nach duktileren, elastischeren und bruchsicheren Eigenschaften, denn die Innenleiste dient insbesondere der Aufnahme oder Bildung von Befestigungsmitteln wie Schrauben, Clipsen oder Ähnlichem. Für die Außenschale kommt insbesondere ein PMMA oder SAN in Betracht, für die Innenleiste ein PC, ein ABS oder eine geeignete Mischung aus diesen beiden Kunststoffen. Die Außenschale kann bei besonders hohen Anforderungen an die Oberflächenqualität und Kratzbeständigkeit zusätzlich beschichtet sein. Außerdem kann vorgesehen sein, dass die Außenschale eine in sich strukturierte, beispielsweise geriffelte oder genarbte, Oberfläche zur Erzielung eines optischen Effekts oder zwecks Nachbildung der Optik eines Nicht-Kunststoffmaterials aufweist.

In einer vorteilhaften Ausführungsform ist an die Blendenleiste, insbesondere an die Außenschale, eine Abdecklippe angespritzt, die dazu dient, einen nicht zu vermeidenden Spalt zwischen der Fahrzeugkarosserie und der Dachblende zu dichten und optisch zu kaschieren. Die Abdecklippe wird bevorzugt durch einen weiteren, sequentiell nachgelagerten Einspritzvorgang an der Dachblende angeformt. Bevorzugter Werkstoff ist hier ein thermoplastisches Elastomer (TPE).

Für die Gewichtsanteile der einzelnen Komponenten hat sich unter der Bedingung, dass sich sowohl Außenschale als auch Innenleiste und Abdecklippe im Wesentlichen über die gesamte Länge der Blendenleiste erstrecken, eine Gewichtsanteilsverteilung als vorteilhaft herausgestellt, bei der die Außenschale etwa 60 - 80 gew.-%, insbesondere 65 - 70 gew.-%, die Innenleiste etwa 20 - 40 gew.-%, insbesondere 28 - 32 gew.-%, und die Abdeckleiste etwa 1 - 5 gew.-%, insbesondere etwa 3 % ausmachen. Je nach Dichte des verwendeten Kunststoffs können diese Werte variieren.

An einer Längsseite der Blendenleiste ist bevorzugt ein sich entlang dieser Längsseite erstreckendes Dichtprofil vorgesehen, das entweder ebenfalls an den Blendenleiste angespritzt ist oder aber mit diesem über geeignete Befestigungsmittel, beispielsweise eine Klebung, verbunden ist. Das Dichtprofil dient der Abdichtung gegen die an die Dachblende angrenzenden Stirnseiten der benachbarten Dachelemente.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Fig. 1 eine Ansicht einer auf einer schematisch dargestellten Fahrzeugkarosserie angeordneten Dachblende,
Fig. 2 die Dachblende aus Figur 1 im Querschnitt,
Fig. 3 die äußere Ansicht der in Fahrtrichtung gesehen vorderen Stirnseite der Dachblende,
Fig. 4 die in Fahrtrichtung gesehen vordere Stirnseite der Dachblende in einer Ansicht von unten, und
Fig. 5 eine perspektivische Ansicht der bezogen auf die Fahrtrichtung hinteren, mit einem Ausgleichsprofilversehenen Stirnseite der Dachblende,
Fig. 6 die hintere Stirnseite aus Fig. 5 in der Seitenansicht,
Fig. 7 die der Karosserie zugewandten Seite der Dachblende mit daran angeordneten Befestigungsmitteln,
Fig. 8 eine zweite Ausführungsform von an der Unterseite der Dachblende angeordneten Befestigungsmitteln,
Fig. 9 eine Dachblende mit seitlichen Ausschnitten und dazu benachbart ausgebildeten Aufnahmen für Klappenmodule,
Fig. 10 die Unterseite der Dachblende aus Figur 9 mit noch nicht eingesetzten Klappenmodulen,
Fig. 11 eine Detailansicht eines in eine Dachblende eingesetzten Klappenmoduls,
Fig. 12 eine schematische Schnittansicht der Dachblende mit einem in einer Aufnahme verrasteten Klappenmodul, und
Fig. 13 eine Dachblende mit vollständig innerhalb der Blendenleiste angeordneten Ausschnitten.

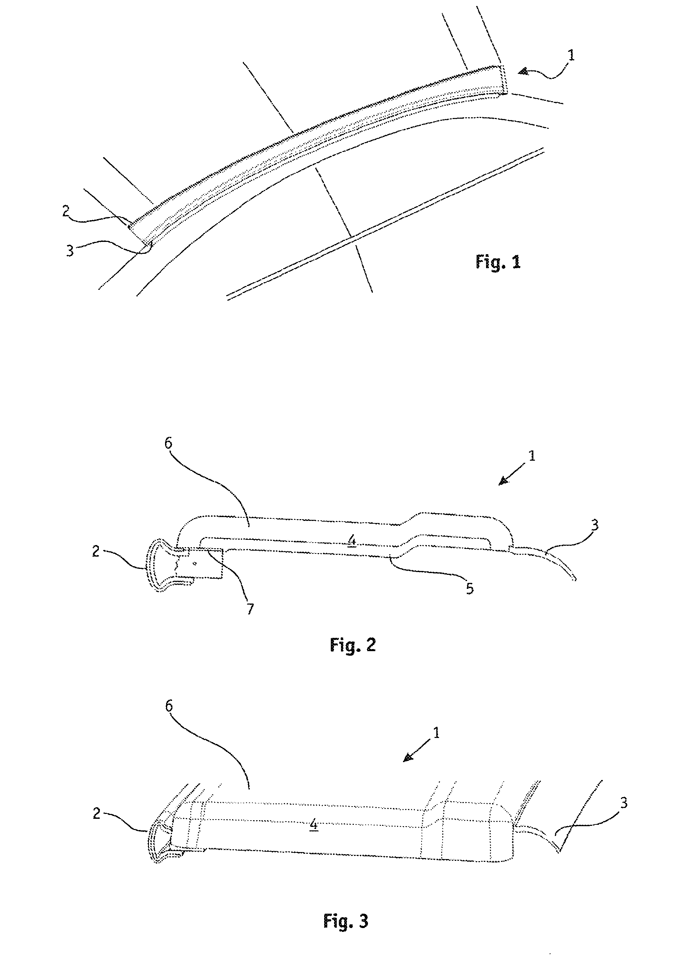

In Figur 1 ist eine Dachblende 1 als Teil des Aufbaus eines nur schematisch angedeuteten Kraftfahrzeugs gezeigt. Die Dachblende 1 ist auf dem Fahrzeugdach zwischen der Karosserie und den beweglichen Elementen eines Glasdachs befestigt. Die Dachblende weist an der den Glasdachelementen zugewandten Längsseite ein Dichtungsprofil 2 und an der gegenüberliegenden, der Karosserie zugewandten Längsseite eine Abdecklippe 3 auf.

Figur 2 zeigt die Dachblende 1 aus Figur 1 im Querschnitt. Die Dachblende 1 umfasst eine Blendenleiste 4, die eine Innenleiste 5 und eine Außenschale 6 aufweist. An der Blendenleiste angeordnet sind das zu Figur 1 bereits erwähnte Dichtungsprofil 2 und die Abdecklippe 3.

Die Innenleiste 5 ist im bestimmungsgemäßen Einbauzustand der Fahrzeugkarosserie zugewandt und dient vor allem der Aufnahme oder Ausbildung von Funktionselementen wie Befestigungsmitteln, Positionierungseinrichtungen und Ausgleichselementen. Zu diesem Zweck ist die Innenleiste 5 aus einem eher duktilen, bruchsicheren Kunststoff hergestellt, insbesondere aus PC oder ABS. Die Außenschale 6 dient der Bildung der von außen sichtbaren Dekorfläche und muss daher vor allem schlagzäh, kratzfest und witterungsbeständig sein. Als Material kommt insbesondere ein PMMA oder SAN in Betracht.

Die Innenleiste 5 bildet bei der Herstellung im Spritzgussverfahren einen Vorspritzling, der ohne Entformung aus dem Werkzeug von der die Außenschale bildenden Schmelze umspritzt wird. Die randseitig an der Blendenleiste 4 befestigte Dichtlippe 3 ist bevorzugt als dritte Komponente ebenfalls ohne Entformung der Blendenleiste 4 aus dem Spritzgusswerkzeug an diesem angespritzt. Da die Dichtlippe 3 insbesondere gummielastische Eigenschaften aufweisen soll, ist diese bevorzugt aus einem TPE hergestellt.

Die Dachblende 1 liegt im verbauten Zustand dichtend an den seitlichen Kanten der beweglichen Elemente einer Dachkonstruktion an. Auch das Dichtungsprofil 2 kann grundsätzlich als weitere Komponente im selben Spritzgusswerkzeug direkt an die Blendenleiste angespritzt werden. Wegen der bevorzugten Ausführung als Hohlprofil und der damit einhergehenden Schwierigkeiten bei der Werkzeuggestaltung bietet es sich jedoch an, das Dichtungsprofil 2, wie in Figur 2 beispielhaft durch das Doppelklebeband 7 gezeigt, mit der Blendenleiste 4 zu verkleben.

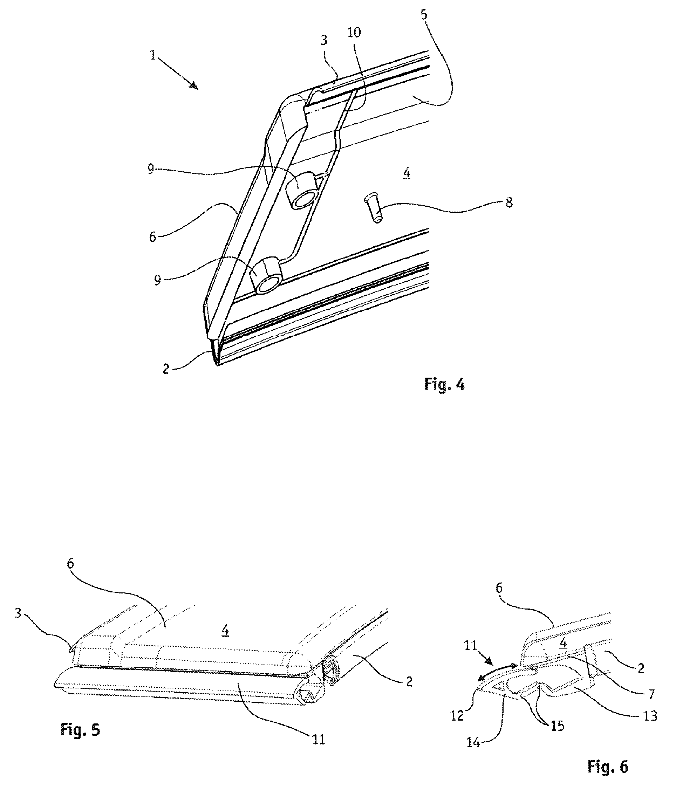

Figur 3 zeigt die in Fahrtrichtung gesehen vordere Stirnseite der Dachblende 1 in einer perspektivischen Ansicht. Figur 4 zeigt denselben Bauteilabschnitt in einer Ansicht von unten. Die Stirnseite weist keine Dichtungs- oder Ausgleichselemente auf. Auf der Unterseite dieses Bauteilbereichs ist eine Positionierungshilfe in Form eines Positionierungsstifts 8 vorgesehen. Die Positionierungshilfe ist dazu bestimmt, mit einem darauf abgestimmten Gegenstück in der Fahrzeugkarosserie oder einer Dachmodulkonstruktion spielfrei zusammenzuwirken. Im Fall eines Positionierungsstifts 8 ist in der Karosserie eine Aufnahme vorgesehen, in die der Stift eintauchen kann. Durch die Positionierungshilfe 8 wird die Dachblenden- bzw. Blendenleistenposition gegenüber der Fahrzeugkarosserie sowie gegenüber den Dachelementen eindeutig festgelegt. Die eindeutige Positionierung erfolgt bei einer Dachblende, deren Positionierungshilfe direkt mit der auf der Karosserie zusammenwirkt, unmittelbar, im Falle der Verwendung einer vormontierten Dachmodulbaugruppe mittelbar über deren spätere Befestigung auf der Karosserie. Die in Figur 4 gezeigte, stiftförmige Ausgestaltung der Positionierungshilfe kann selbstverständlich auch durch andersartig ausgestaltete Positionierungshilfen und darauf abgestimmte Gegenstücke ersetzt werden, die die gleiche Funktion zu erfüllen vermögen.

Durch die Positionierungshilfe 8 ist die Dachblende also frontseitig eindeutig gegenüber der Karosserie festgelegt. Thermisch bedingte Verschiebungen der Dachblende gegenüber der Karosserie können demnach an dieser Stelle nicht auftreten. Sie sind durch geeignete Maßnähmen an anderer Stelle auszugleichen.

Zusätzlich kann die Blendenleiste 4 an der Unterseite eine oder mehrere Z-Auflagen 9 aufweisen, die dazu dienen, als Höhenanschlag die Dekorfläche der Außenschale 6 an den Verlauf der angrenzenden Karosserieaußenhaut und der benachbarten Dachelemente anzugleichen. Die Z-Auflagen 9 können entweder integral und werkstoffeinstückig mit der Innenleiste 5 ausgebildet werden, sie können allerdings auch - ebenso wie die Abdecklippe 3 - aus elastomerähnlichem Weichkunststoff, z.B. TPE, an die Innenleiste 4 angespritzt sein. Es bietet sich in diesem Fall an, die Dichtlippe und die Z-Auflagen im selben Spritzgussvorgang an die Blendenleiste 4 anzuspritzen, wie die in Figur 4 ersichtlichen Verbindungskanäle 10 für die eingespritzte Kunststoffschmelze zeigen.

Z-Auflagen mit gummielastischen Eigenschaften ermöglichen insbesondere, die Dachblende federnd gegen die Karosserie anzudrücken, um so ein Verrasten von an der Blendenleiste 4, insbesondere an der Innenleiste 5, vorgesehenen Befestigungsmitteln mit einem geeigneten, an der Karosserie angeordneten Gegenstück zu erreichen und um diese nach dem Einrasten mittels der rückfedernden Wirkung der Z-Auflagen 9 in spielfreier Anlage zu halten. So kann über die Dauer des Fahrzeuglebens vermieden werden, dass es durch Verschleiß - oder Ermüdungserscheinungen zu unerwünschten Klapper- oder Vibrationsgeräuschen kommen kann. Die Anzahl der über die Länge der Dachblende benötigten Z-Auflagen wird der Fachmann für den jeweiligen Anwendungsfall anzupassen wissen.

Da die Dachblende durch die Positionierungshilfe 8 im vorderen Bereich unverrückbar gegenüber der Karosserie positioniert ist, muss eine auftretende, temperaturbedingte Längenänderung der Dachblende gegenüber der Karosserie an anderer Stelle, insbesondere an der gegenüberliegenden, hinteren Stirnseite, durch geeignete Ausgleichselemente aufgefangen bzw. ausgeglichen werden.

Hierzu weist die Blendenleiste 4 der Dachblende 1, wie in Figur 5 und Figur 6 gezeigt, an der besagten Stirnseite ein Ausgleichsprofil 11 auf. Mit der einen Seite ist es ähnlich wie das Dichtungsprofil 2 an der Blendenleiste 4 mit doppelseitigem Klebeband 7 angeklebt. An der der Blendenleistenstirnseite abgewandten Seite bildet es eine Abschlusskante 12 aus, die federnd gegen die angrenzende Karosseriehaut angestellt ist. Der Querschnitt des Ausgleichsprofils 11 zeigt einen ersten Profilabschnitt 13, der fest und relativ zur Blendenleiste unbeweglich an dieser angeordnet ist. Ein die Abschlusskante 12 bildender zweiter Profilabschnitt 14 ist gelenkig am ersten Profilabschnitt 13 angelenkt. Dies wird durch eine Mehrzahl von Sollknickstellen 15, beispielsweise in Form von Filmscharnieren, erreicht. Außerdem übergreift der erste Profilabschnitt 13 den zweiten Profilabschnitt 14 an der den Filmscharnieren gegenüberliegenden Seite des Profils 11. Dadurch ist gewährleistet, dass die beiden Profilabschnitte derart scherenartig ineinander greifen können, dass eine Längenänderung der Blendenleiste durch eine Breitenreduzierung oder -erweiterung des Ausgleichsprofils 11 aufgefangen wird und kein sichtbarer Spalt entsteht. Alternativ zum in den Figuren dargestellten Ausgleichsprofil kann selbstverständlich auch ein andersartiges Dicht- bzw. Überbückungsprofil, zum Beispiel ähnlich der in Figuren 2 und 3 gezeigten Abdecklippe 3, aus einem verformbaren, elastomerähnlichen Weichkunststoff wie TPE vorgesehen sein, dass sich zur Reduzierung bzw. Erweiterung der zur Karosserie bestehenden Spaltbreite verformt. Wie die in Figur 2 und 3 gezeigte Abdecklippe können das Ausgleichsprofil oder das Dicht- bzw. Überbrückungsprofil direkt an die Blendenleiste angespritzt sein.

Auch die Befestigungsmittel zur Befestigung der Dachblende auf der Karosserie sollten eine Längenänderung der Dachblende gegenüber der Karosserie zulassen und ausgleichen können, um längenänderungsbedingte Spannungen zwischen Dachblende und Karosserie oder Dachmodulbaugruppe zu vermeiden.

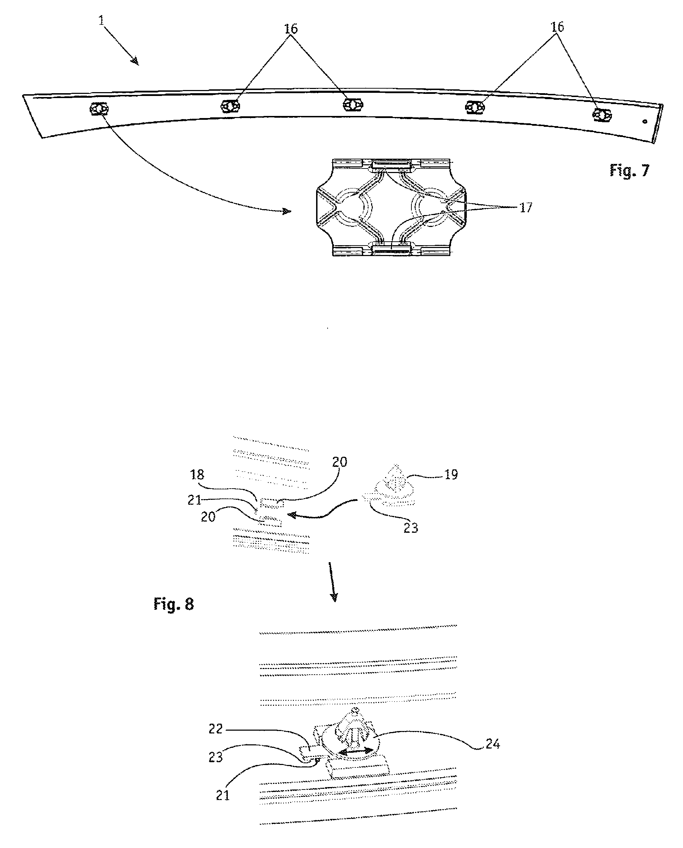

Figuren 7 und 8 zeigen zwei Ausführungsformen von Befestigungsmitteln, die dies ermöglichen.

Bei der in Figur 7 gezeigten Ausführungsform sind die Befestigungsmittel durch auf der Innenleiste 5 der Blendenleiste 4 fest angebrachte, insbesondere aufgeklebte Befestigungsclips 16 gebildet. Letztere könnten ebenso gemeinsam mit dieser in einem Spritzgussvorgang hergestellt werden. Seitliche Klammerfortsätze 17 hintergreifen beim Aufsetzen der Dachblende auf die Karosserie oder ein vormontiertes Dachmodul korrespondierende Gegenstücke. Die Befestigungsclipse 16 fixieren die Dachleiste dabei in y-Richtung und z-Richtung, erlauben dagegen aber durch eine entsprechende Gestaltung der Gegenstücke eine relative Verschiebung der Dachblende 1 bzw. der Blendenleiste 4 gegenüber der Karosserie in x-Richtung. Für die in Figur 7 gezeigten Befestigungsclipse 16 sind demnach auf die Clipse 18 ausgerichtete und hierfür angepasste Gegenstücke erforderlich, die an der Karosserie oder am Dachmodul ortsfest vormontiert sind.

Bei der in Figur 8 gezeigten Ausführungsform weist die Innenleiste 4 unterseitig eine Clipsaufnahme 18 auf, in die Befestigungsclipse 19 eingeführt werden können. Zur Innenleistenoberfläche im Wesentlichen parallele Rückhaltestege 20 der Clipsaufnahme 18 hintergreifen einen Randbereich des Befestigungsclips 19. Die Clipsaufnahmen 18 sind derart ausgestaltet, dass die Befestigungsclips 19 in die Clipsaufnahme 18 eingesetzt werden können und in der Aufnahme 18 verrasten. Neben den Rückhaltestegen 20 ist ein Rückhaltefortsatz 21 an der Innenleiste 4 ausgeformt, der beim Einschieben der Befestigungsclips 19 in die Clipsaufnahme 18 hintergriffen wird, so dass der Befestigungsclip 19 nach dem Verrasten in der Aufnahme 18 gehalten wird. In der in Figur 8 gezeigten Ausführungsform wird dies beispielhaft druch einen selbsttätig einfedernden Klemmarm 22 erreicht, der die Befestigungsclips 19 in Position zu halten vermag, damit die Clipse 19 bei der Montage nicht aus der Aufnahme 18 herausfallen können.

Um den Längenausgleich zu ermöglichen, sollten, wie in Figur 8 gezeigt, die Clipsaufnahme 18 und die Befestigungsclipse 19 derart aufeinander abgestimmt sein, dass der Befestigungsclip 19 bei ordnungsgemäßer Montage innerhalb der Clipsaufnahme in x-Richtung verschieblich ist. So kann der in Figur 8 gezeigte Befestigungsclip 19 beispielsweise nach rechts verschoben werden, bevor der Klemmarm 22 mit seinem Rastvorsprung 23 am Rückhaltefortsatz 21 anliegt.

Beim Aufsetzen der in Figur 8 ausschnittweise wiedergegebenen Dachblende auf die Karosserie dringen die Befestigungsclips 19 durch in der Karosserieaußenhaut vorgesehene Befestigungsöffnungen, beispielsweise Rundlöcher, und hintergreifen das Karosserieblech. Ein am Befestigungsclip 19 angeordneter Dichtkragen 24 kommt dabei dichtend gegen die Karosserieaußenhaut in Anlage und verhindert, dass Wasser durch die Befestigungsöffnung in Rahmenteile der Karosserie oder ins Fahrzeuginnere eindringen kann. Die Verbindung zwischen Befestigungsclip 19 und Karosserie kann wegen der die Ausgleichsbewegung in x-Richtung zulassenden Ausgestaltung der an der Blendenleiste 4 vorgesehenen Clipsverbindung derart sein, dass der Befestigungsclip 19 fest und unverrückbar in der Karosserie gehalten ist.

Selbstverständlich ist die Verwendung der vorstehend beschriebenen Dachblende nicht auf am Fahrzeug seitlich angeordnete Dachblenden beschränkt. Die einzelnen Aspekte der Erfindung lassen sich ebenso gut auf Heckdachblenden übertragen. Hierbei kann die Außenschale insbesondere auch derart gestaltet sein, dass die Außenschale Spoiler oder ähnliche optische Elemente ausbildet.

Auch können in die Außenschale zusätzliche Dekorelemente wie Metallstreifen, Herstellerlogos oder Modellschriftzüge eingebettet sein. Diese können insbesondere dadurch zum Bestandteil der Außenschale und damit der Dachblende gemacht werden, dass diese in die Spritzgussform eingelegt und von der die Außenschale bildenden Schmelze hinterspritzt werden. Auch die Integration von Beleuchtung und Reflektoren, einschließlich der hierfür benötigten Anschlussleitungen, in eine solche Dachblende ist möglich.

Für den Fall, dass die Dachblende auch Aufnahmen für Dachgepäckträger oder Ausschnitte für Rehlingaufnahmen aufweisen oder in der Dachblende zumindest Abdeckelemente wie Klappen für eine solche Aufnahme vorgesehen sein sollen, kann es sich anbieten, Funktionselemente wie Anlenkpunkte oder sonstige Scharnierelemente, mit denen die Klappen zusammenwirken sollen, im Rahmen des Spritzgussvorgangs unmittelbar an die Blendenleiste anzuformen, so dass sich die Abdeckelemente nachträglich einfach montieren lassen. Dies kann, wie nachfolgend noch erläutert werden wird, allerdings auch nachteilig sein. Eventuell erforderlich Ausschnitte in der Blendenleiste oder auch das Abtrennen der Angussstellen werden bevorzugt durch Laserschneiden realisiert.

Für den Anguss bietet es sich an, diesen als breiten Filmanguss von der Mitte des Werkzeugs aus zu realisieren und so zu positionieren, dass die beim Abtrennen des Angusses entstehende Trennkante von dem später zu montierenden Dichtungsprofil abgedeckt wird.

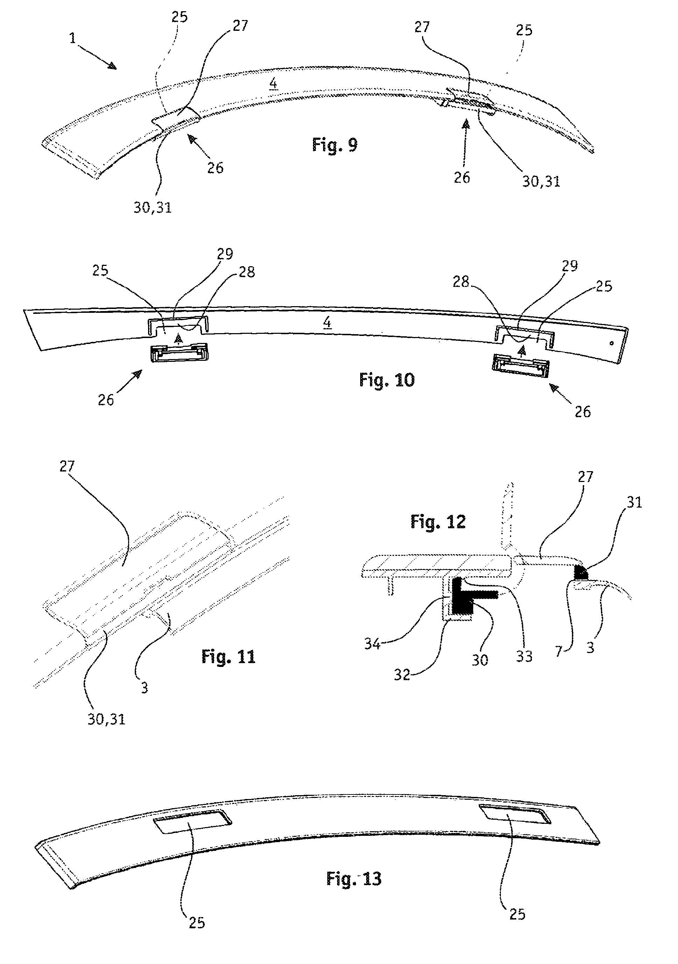

Figuren 9 bis 13 zeigen eine weitere bevorzugte Ausgestaltung einer Dachblende.

Dachblenden mit darin angeordneten, von Klappen verschlossenen Öffnungen, in die Befestigungsteile von Dachträgern oder ähnlichen Aufbauten eintauchen können, um mit darunter liegenden, mit dem Fahrzeug fest verbundenen Halterungen zusammenwirken zu können, sind aus dem Stand der Technik bekannt. Der hierfür erforderliche, komplexere Aufbau der Dachblenden ist für die Herstellung von Dachblenden aus Kunststoff wegen der Anforderungen an einen prozesssicheren Spritzgussvorgang und ein herstellungsgerechtes Produktionsverfahren nicht optimal. Es wäre daher wünschenswert, die Dachblende weiterzubilden, um eine im Hinblick auf die Kunststoffverarbeitung, insbesondere einen Spritzgussprozess, fertigungsgerechte Ausgestaltung einer Dachblende mit darin vorgesehenen Öffnungen zu schaffen, die eine einfache und preisgünstige Herstellung einer Dachblende ermöglicht.

Die in Figur 9 gezeigte Dachblende 1 weist seitliche Ausschnitte 25 auf, in denen Module 26 aufgenommen sind, die eine Klappe 27 zum Verschließen der von den Ausschnitten 25 gebildeten Öffnungen aufweisen. Die Öffnung dient dazu, dass Dachträger oder ähnliche Dachaufbauten mit den daran angeordneten Befestigungsmitteln in die Dachblende 1 eintauchen bzw. durch diese hindurch ragen können, um mit darunter liegenden, mit der Karosserie fest verbundenen Halterungen zusammenzuwirken.

Wie Figur 10 verdeutlicht, sind an der Unterseite der Blendenleiste bevorzugt einstückig und im selben Spritzgussvorgang mit der Innenleiste 5 ausgeformte Klappenmodulaufnahmen 28 vorgesehen, in die die Klappenmodule 26 eingesetzt, insbesondere seitlich eingeschoben werden können. Die schubfachartigen Aufnahmen 28 werden von Halteleisten 29 gebildet und sind derart angeordnet, dass das kassettenähnlich ausgestaltete Klappenmodul 26 in die Aufnahmen 28 nachträglich eingesetzt werden kann. Es ist vorgesehen, dass die Klappenmodule 26 bei Erreichen in die bestimmungsgemäße Einbaulage mit der Blendenleiste 4 in der Aufnahme 28 verrasten.

Alternativ zur vorstehend beschriebenen und in den Figuren gezeigten Ausgestaltung können die Klappenmodule natürlich auch auf andere Weise mit der Blendenleiste 4 verbunden, insbesondere verrastet, werden.

Die Klappenmodule 26 sind also von der Blendenleiste 4 getrennt hergestellte Bauteile, die nachträglich in an der Blendenleiste 4 vorgesehene Aufnahmen 28 eingesetzt werden können. Dies hat unter anderem den Vorteil, dass die an den Klappenmodulen 26 zur Abbildung von Scharnieren und ähnlichen komplexeren Strukturen erforderlichen Maßnahmen nicht im Spritzgusswerkzeug für die Blendenleiste 4 abgebildet werden müssen.

Insbesondere in den Figuren 9, 11 und 12 ist zu erkennen, dass die Klappenmodule mehrteilig aufgebaut sind und neben der Klappe 27 selbst einen Klappenträger 30 aufweisen. Die Klappe 27 ist über ein Scharnier am Klappenträger 30 angeordnet. Der Klappenträger 30 bildet außerdem ein Rahmenabschnitt 31 aus, das die bedingt durch die Ausschnitte 25 fehlende seitliche Stirnseite der Blendenleiste 4 derart ergänzt, dass das Rahmenabschnitt 31 der Abdecklippe 3 oder einem sonstigen Dichtprofil im Bereich der Ausschnitte 25 eine Auflage bietet.

Figur 12 verdeutlicht in einer schematisch dargestellten Schnittansicht, wie ein Klappenmodul 26 an der Blendenleiste 4 gehalten ist. Ein rückwärtiger Teil des vollständig eingeschobenen Klappenträgers 30 wird von einem Haltesteg 32 umgriffen. Zwecks Herstellung einer Rastverbindung mit der Blendenleiste 4 ist an der Blendenleistenunterseite ein Rastvorsprung 33 vorgesehen, der zwecks Verrastung der Bauteile miteinander beim Einschieben durch leichtes Überdrücken des Klappenmoduls in die Aufnahme hinein überwunden werden muss. Rückseitig drückt ein Zwischenelement 34 gegen den Klappenträger 30, um diesen unter Vorspannung spiel- und vibrationsfrei in der Aufnahme 28 zu halten. Haltesteg 32, Rastvorsprung 33 und Zwischenelement 34 sind bevorzugt werkstoffeinstückig mit der Innenleiste 5 der Blendenleiste ausgebildet und in einem Spritzgussvorgang mit der Innenleiste 5 hergestellt. Die Abdecklippe 3 stützt sich unterseitig gegen ein vom Klappenträger 30 gebildeten Rahmenabschnitt 31 ab und ist mit diesem verbunden, zum Beispiel über eine Klebung mittels eines Doppelklebebandes 7.

Figur 13 zeigt eine alternative Ausgestaltung einer Blendenleiste 4, bei der die Ausschnitte 25 vollständig innerhalb der Blendenleiste liegen, randseitig also nicht offen sondern vollständig vom Blendenleistenmaterial umgeben sind. Eine derartige Ausgestaltung ist optisch ansprechender, jedoch weniger fertigungsgerecht wie die zuvor beschriebene Ausgestaltung.

Es ist zwar möglich, die in Figur 13 gezeigte Art der Ausschnitte 25 durch in das Spritzgusswerkzeug eingebrachte Kerne unmittelbar beim Spritzgießen auszubilden. Wegen der dann jedoch zumeist erforderlichen Nachbearbeitung von Blindnähten im Sichtbereich werden die Ausschnitte 25 bevorzugt nachträglich durch Laserschneiden in die Blendenleiste 4 eingebracht. Durch das dabei auftretenden Aufschmelzen des Kunststoffs im Schnittbereich sind die beim Schneiden entstehenden Kanten nicht scharfkantig und bedürfen keiner Nachbearbeitung. Außerdem lassen sich dann, wenn die Ausschnitte 25 erst nachträglich in die Blendenleiste eingebracht werden, mit gleichartigen und im selben Werkzeug hergestellten Blendenleisten 4 unterschiedliche Dachblendenvarianten mit unterschiedlichen Ausschnittformen und Positionen herstellen. Dies ermöglicht es auch, das gleiche Spritzgusswerkzeug für Blendenleisten mit und ohne Ausschnitte 25 zu nutzen und die Ausschnitte bedarfsgerecht nur dann in Blendenleisten zu schneiden, wenn das individuelle Fahrzeug dem Kundenwunsch entsprechend mit einer so ausgestatteten Dachblende versehen werden soll. Durch entsprechende Aufnahmen und/oder Einrastmöglichkeiten es auch bei den in Figur 13 gezeigten Ausschnitten 25 möglich, vormontierte Klappenmodule mit der Blendenleiste unterseitig zu verrasten oder in diese einzuhängen. So ergibt sich auch für diese Ausführungsform die vorstehend bereits beschriebene einfache Montage vormontierter Klappenmodule.

Soweit vorstehend von den Koordinatenbezeichnungen x, y oder z Gebrauch gemacht wird, meint "x" die Koordinate in Richtung der Fahrzeuglängsachse (Fahrtrichtung), "y" die Koordinate in Richtung der Fahrzeugquerachse und "z" die Koordinate in Richtung der Fahrzeughochachse.

## Patentansprüche

1. Dachblende zum Aufsetzen auf eine Kraftfahrzeugkarosserie oder als Teil eines auf eine Kraftfahrzeugkarosserie aufzusetzenden Dachmoduls, umfassend eine Blendenleiste (4), wobei die Blendenleiste (4) an einer ersten Position eine Positionierhilfe (8) aufweist, mittels der die Blendenleiste (4) im bestimmungsgemäßen Einbauzustand an der ersten Position relativ zur Fahrzeugkarosserie eindeutig festgelegt ist, **dadurch gekennzeichnet, dass** an zumindest einer, von der ersten Position entfernten, zweiten Position ein Ausgleichselement (11, 16, 18, 19) vorgesehen ist, das längenänderungsbedingte Verschiebungen zwischen Blendenleiste (4) und Fahrzeugkarosserie in Blendenleistenlängsrichtung auszugleichen vermag.

2. Dachblende nach Anspruch 1, **dadurch gekennzeichnet, dass** das Ausgleichselement ein Befestigungselement (16, 19, 20) ist, das die Blendenleiste (4) mit der Fahrzeugkarosserie derart verbindet, dass es Relativbewegungen zwischen Blendenleiste (4) und Fahrzeugkarosserie in Blendenleistenlängsrichtung zulässt, während es Bewegungen in Blendenleistenquerrichtung unterbindet.

3. Dachblende nach einem der beiden vorhergehenden Ansprüche, **dadurch gekennzeichnet, dass** das Ausgleichselement (11, 16, 18, 19) von einem Ausgleichsprofil (11) gebildet ist, das einen Spalt zwischen Blendenleiste (4) und Karosserie im bestimmungsgemäßen Einbauzustand der Dachblende (1) zu überbrücken vermag und das derart nachgiebig ausgestaltet ist, dass sich die Ausgleichsprofilbreite bei relativen Längenänderungen zwischen Blendenleiste (4) und Karosserie selbsttätig an die damit einhergehende Spaltbreitenänderung anzupassen vermag.

4. Dachblende nach einem der vorhergehenden Ansprüche, **dadurch gekennzeichnet, dass** die Positionierhilfe (8) am einen Ende, insbesondere im Bereich der frontseitigen Stirnseite der Blendenleiste (4), und zumindest ein Ausgleichselement (11, 16, 18, 19), insbesondere das Ausgleichsprofil (11), am anderen Ende der Blendenleiste (4), insbesondere an der heckseitigen Stirnseite angeordnet ist.

5. Dachblende nach einem der vorhergehenden Ansprüche, **dadurch gekennzeichnet, dass** die Blendenleiste (4) eine Außenschale (6) aufweist, die eine äußerlich sichtbare Dekorfläche der Blendenleiste (4) bildet, und eine Innenleiste (5) aufweist, die von der Außenschale (6) zumindest teilweise umgeben ist, wobei die Außenschale (6) und die Innenleiste (5) fest miteinander verbunden sind, wobei die Außenschale (6) an die Innenleiste (5) oder die Innenleiste (5) an die Außenschale (6) angespritzt ist.

6. Dachblende nach Anspruch 5, **dadurch gekennzeichnet, dass** die Außenschale (6) und die Innenleiste (5) aus Kunststoff sind und die Blendenleiste (4) durch sequentielles Einspritzen einer ersten Schmelze und einer zweiten Schmelze in ein Spritzgusswerkzeug hergestellt ist.

7. Dachblende nach einem der vorhergehenden Ansprüche, **dadurch gekennzeichnet, dass** an die Blendenleiste (4) eine Abdecklippe (3) angespritzt ist, die einen zwischen Karosserie und Blendenleiste (4) bestehenden Spalt zu dichten und/oder optisch zu überbrücken vermag.

8. Dachblende nach einem der vorhergehenden Ansprüche, **dadurch gekennzeichnet, dass** die Blendenleiste (4) unterseitig einen Höhenanschlag (9) aufweist, der den Verlauf der Dekoraußenfläche der Blendenleiste (4) an den Verlauf der angrenzenden Karosserieaußenhaut und/oder der angrenzenden Dachelemente im bestimmungsgemäßen Einbauzustand definiert.

9. Dachblende nach einem der vorhergehenden Ansprüche, **dadurch gekennzeichnet, dass** die Blendenleiste (4) eine Aufnahme (28) für ein Klappenmodul (26) aufweist, in die das Klappenmodul (26) nachträglich eingesetzt werden kann.

10. Dachblende nach Anspruch 9, **dadurch gekennzeichnet, dass** die Blendenleiste (4) Rastmittel (33) aufweist, über die das Klappenmodul (26) bei bestimmungsgemäßem Einsetzen in die Aufnahme (28) mit der Blendenleiste (4) verrastet.

11. Dachblende nach Anspruch 9 oder 10, **dadurch gekennzeichnet, dass** das Klappenmodul (26) kassettenartig ausgebildet ist und in die Aufnahme (18) einschiebbar ist.

12. Dachblende nach Anspruch 9, 10 oder 11, **dadurch gekennzeichnet, dass** das Klappenmodul (26) einen Klappenträger (30) mit einem Rahmenabschnitt (31) aufweist, wobei das Rahmenabschnitt (31) derart ausgebildet ist, dass es bei bestimmungsgemäß in die Aufnahme (28) eingesetzten Klappenträger (30) eine Auflage für ein Dichtprofil, insbesondere für die Abdecklippe (3), ausbildet.

## Claims

1. A roof trim for mounting on a motor car body or as part of a roof module which is to be mounted on a motor car body, comprising a trim strip (4), wherein the trim strip (4) comprises a positioning aid (8) at a first position by means of which the trim strip (4) is unequivocally fixed at the first position relative to the car body when being fitted as intended, **characterised in that** an adjustment element (11, 16, 18, 19) is provided at least at a second position distant from the first position which is able to compensate for movements caused by changes in length between the trim strip (4) and the car body in longitudinal direction of the trim strip.

2. Roof trim according to claim 1, **characterised in that** the adjustment element is a fastening element (16, 19, 20) which connects the trim strip (4) with the car body in such a way as to permit relative movements between trim strip (4) and car body in longitudinal direction of the trim strip, whilst preventing movements in transverse direction of the trim strip.

3. Roof trim according to one of the two preceding claims, **characterised in that** the adjustment element (11, 16, 18, 19) is formed of an adjustment profile (11) which is able to bridge a gap between trim strip (4) and car body when the roof trim (1) is being fitted as intended and which is designed to be elastic such that the width of the adjustment profile is able to automatically adapt to the corresponding change in gap width for relative changes in length between trim strip (4) and car body.

4. Roof trim according to one of the preceding claims, **characterised in that** the positioning aid (8) is arranged at one end, in particular in the area of the front side face of the trim strip (4), and at least one adjustment element (11, 16, 18, 19), in particular the adjustment profile (11), is arranged at the other end of the trim strip (4), in particular at the rear side face.

5. Roof trim according to one of the preceding claims, **characterised in that** the trim strip (4) comprises an outer shell which forms an openly visible decorative surface of the trim strip (4) and an inner strip (5) which is surrounded at least partially by the outer shell (6), wherein the outer shell (6) and the inner strip (5) are firmly connected with each other, wherein the outer shell (6) is injection-moulded to the inner strip (5) or the inner strip (5) is injection-moulded to the outer shell (6).

6. Roof trim according to claim 5, **characterised in that** the outer shell (6) and the inner strip (5) are made of plastic and **in that** the trim strip (4) is produced by sequentially injecting a first melt and a second melt into an injection-moulding tool.

7. Roof trim according to one of the preceding claims, **characterised in that** a covering lip (3) is injection-moulded to the trim strip (4), which lip is able to seal a gap between car body and trim strip (4) and/or is able to optically bridge the gap.

8. Roof trim according to one of the preceding claims, **characterised in that** the trim strip (4) comprises a height stop (9) on the underside, which adapts the progression of the decorative outer surface of the trim strip (4) to the progression of the adjacent car body outer skin and/or of the adjacent roof elements in the intended fitting state.

9. Roof trim according to one of the preceding claims, **characterised in that** the trim strip (4) comprises a holder (28) for a flap module (26), into which the flap module (26) can be fitted at a later stage.

10. Roof trim according to claim 9, **characterised in that** the trim strip (4) comprises locking means (33) via which the flap module (26) locks with the trim strip (4) when it is fitted into the holder (28).

11. Roof trim according to claim 9 or 10, **characterised in that** the flap module (26) is formed in the manner of a cartridge which can be pushed into the holder (28).

12. Roof trim according to claim 9, 10 or 11, **characterised in that** the flap module (26) comprises a flap carrier (30) with a frame section (31), wherein the frame section (31) is formed such that when the flap carrier (30) is fitted as intended into the holder (28), it forms a support for a sealing profile, in particular for a covering lip (3).

## Revendications

1. Couverture de toit à poser sur une carrosserie de véhicule ou comme partie d'un module de toit à poser sur une carrosserie de véhicule, comprenant une baguette de couverture (4), la baguette de couverture (4) présentant sur une première position une aide de positionnement (8), au moyen de laquelle la baguette de couverture (4) est fixée clairement dans l'état de montage conforme à la destination sur la première position par rapport à la carrosserie de véhicule, **caractérisée en ce qu'**il est prévu sur au moins une seconde position, éloignée de la première position, un élément d'équilibrage (11, 16, 18, 19) qui est en mesure d'équilibrer des décalages dus à la variation de longueur entre la baguette de couverture (4) et la carrosserie de véhicule dans le sens longitudinal de la baguette de couverture.

2. Couverture de toit selon la revendication 1, **caractérisée en ce que** l'élément d'équilibrage est un élément de fixation (16, 19, 20), qui relie la baguette de couverture (4) à la carrosserie du véhicule de telle sorte qu'il autorise des déplacements relatifs entre la baguette de couverture (4) et la carrosserie de véhicule dans le sens longitudinal de la baguette de couverture, alors qu'il interdit des déplacements dans le sens transversal de la baguette de couverture.

3. Couverture de toit selon l'une des deux revendications précédentes, **caractérisée en ce que** l'élément d'équilibrage (11, 16, 18, 19) est formé par un profilé d'équilibrage (11) qui est en mesure de surmonter une fente entre la baguette de couverture (4) et la carrosserie lorsque la couverture de toit (1) est dans l'état de montage conforme à la destination et qui est conçu souple de telle sorte que la largeur de profilé d'équilibrage est en mesure de s'adapter automatiquement à la variation concomitante de la largeur de vente dans le cas de variations de longueur relatives entre la baguette de couverture (4) et la carrosseries.

4. Couverture de toit selon l'une des revendications précédentes, **caractérisée en ce que** l'aide de positionnement (8) est disposée sur une extrémité, en particulier dans la zone du côté avant frontal de la baguette de couverture (4), et au moins un élément d'équilibrage (11, 16, 18, 19), en particulier le profilé d'équilibrage (11), est disposé sur l'autre extrémité de la baguette de couverture (4), en particulier sur le côté frontal côté arrière.

5. Couverture de toit selon l'une des revendications précédentes, **caractérisée en ce que** la baguette de couverture (4) présente une coque extérieure (6), qui forme une surface de décor visible extérieurement de la baguette de couverture (4), et présente une baguette intérieure (5), qui est entourée au moins partiellement par la coque extérieure (6), la coque extérieure (6) et la baguette intérieure (5) étant reliées fixement l'une à l'autre, la coque extérieure (6) étant injectée sur la baguette intérieure (5) ou la baguette intérieure (5) sur la coque extérieure (6).

6. Couverture de toit selon la revendication 5, **caractérisée en ce que** la coque extérieure (6) et la baguette intérieure (5) sont en matière synthétique et la baguette de couverture (4) est fabriquée par une injection séquentielle d'une première matière de fusion et d'une seconde matière de fusion dans un outil de moulage par injection.

7. Couverture de toit selon l'une des revendications précédentes, **caractérisée en ce qu'**une lèvre de recouvrement (3), qui est en mesure d'étanchéifier une fente et/ou de surmonter visuellement une fente existant entre la carrosserie et la baguette de couverture (4), est injectée sur la baguette de couverture (4).

8. Couverture de toit selon l'une des revendications précédentes, **caractérisée en ce que** la baguette de couverture (4) présente sur le côté inférieur une butée de hauteur (9) qui adapte le tracé de la surface extérieure de décor de la baguette de recouvrement (4) au tracé de l'enveloppe extérieure de carrosserie contigüe et/ou des éléments de toit contigus dans l'état de montage conforme à la destination.

9. Couverture de toit selon l'une des revendications précédentes, **caractérisée en ce que** la baguette de recouvrement (4) présente un logement (28) pour un module de clapet (26), dans lequel le module de clapet (26) peut être inséré ultérieurement.

10. Couverture de toit selon la revendication 9, **caractérisée en ce que** la baguette de couverture (4) présente des moyens d'encliquetage (33), par lesquels le module de clapet (26) s'enclenche dans le cas d'une insertion conforme à la destination dans le logement (28) avec la baguette de couverture (4).

11. Couverture de toit selon la revendication 9 ou 10, **caractérisée en ce que** le module de clapet (26) est conçu en forme de cassette et peut être introduit dans le logement (28).

12. Couverture de toit selon la revendication 9, 10 ou 11, **caractérisée en ce que** le module de clapet (26) présente un support de clapet (30) avec une partie de cadre (31), la partie de cadre (31) étant conçue de telle sorte qu'elle forme un support pour un profilé d'étanchéité, en particulier pour la lèvre d'étanchéité (3), lorsque le support de clapet (30) est inséré correctement dans le logement (28).
